Europäisches Patentamt

(19) European Patent Office

Office européen des brevets

(11) Numéro de publication : **0 283 378 B1**

(12) # FASCICULE DE BREVET EUROPEEN

(45) Date de publication du fascicule du brevet :
14.08.91 Bulletin 91/33

(51) Int. Cl.⁵ : **B29C 31/00, B29C 51/26**

(21) Numéro de dépôt : 88400529.9

(22) Date de dépôt : 04.03.88

(54) **Procédé de conformation d'éléments en matière synthétique tels que des pièces de carrosserie pour véhicule automobile et dispositif pour la mise en oeuvre dudit procédé.**

(30) Priorité : 06.03.87 FR 8703033

(43) Date de publication de la demande :
21.09.88 Bulletin 88/38

(45) Mention de la délivrance du brevet :
14.08.91 Bulletin 91/33

(84) Etats contractants désignés :
BE CH DE ES FR GB IT LI NL SE

(56) Documents cités :
DE-A- 3 539 573
FR-A- 2 223 104
GB-A- 2 094 701
GB-A- 2 156 729
US-A- 3 396 062
US-A- 4 181 551

(56) Documents cités :
US-A- 4 304 751
PLASTIQUES MODERNES ET ELASTOMERES, vol. 38, no. 7, septembre 1986, pages 35-38, Paris, FR; I. TROCHERIE: "Dossier thermoplastiques renforcés et estampables"

(73) Titulaire : REGIE NATIONALE DES USINES RENAULT
Boîte postale 103 8-10 avenue Emile Zola
F-92109 Boulogne-Billancourt (FR)

(72) Inventeur : Dordet, Patrick
10, rue des Aulnaies
F-95320 Saint Leu La Foret (FR)

(74) Mandataire : Ernst-Schonberg, Michel et al
REGIE NATIONALE DES USINES RENAULT (S. 0267) 8 & 10, avenue Emile Zola
F-92109 Boulogne Billancourt Cédex (FR)

## Description

La présente invention se rapporte à un procédé de conformation d'éléments en matière synthétique par moulage sous pression, dans lequel on déroule à partir d'une bobine un voile support entraîné par une bande sans fin sur lequel on charge les flans à conformer, ces derniers étant successivement positionnés par ledit voile sur un élément de moule coopérant avec un élément de moule complémentaire.

On connaît les propriétés avantageuses des matières plastiques utilisées dans divers éléments de carrosserie, tels que les capots, les ailes, les portières, les boucliers, etc... Outre le gain de poids qui en découle, on peut intégrer dans la pièce dès son moulage, diverses fonctions antérieurement assurées par des éléments séparés, rapportés au cours d'une opération spécifique. De telles pièces en matière synthétique sont généralement conformées sous pression, à partir de flans de dimensions adéquates disposés entre les deux parties d'un moule.

Des matériaux utilisables peuvent être thermoplastiques, tels que polypropylène ou polyamides, ou thermodurcissables, tels que polyesters chargés de mèches ou de tissus de verre.

Dans les deux cas, un échange calorique trop rapide entre le flan incident de matériau à conformer et le moule sous-jacent constitue un inconvénient, car une polymérisation trop rapide nuit au fluage de la matière et donc au bon remplissage du moule.

Pour les mêmes raisons, l'utilisation de matériaux thermoplastiques préchauffés antérieurement à leur introduction dans le moule de conformation, rend déterminant le temps nécessaire à leur transport, généralement manuel, entre ces deux postes de travail pour la bonne qualité de la pièce finale, surtout si elle a un dessin tourmenté.

Le problème ci-dessus est particulièrement sensible pour les nouveaux matériaux, utilisés en fonction de leur bon aspect extérieur et de leur tenue aux températures élevées, mais pour lesquels la plage de viscosité est relativement étroite ; il en est par exemple ainsi pour les alliages de polyphénylèneoxyde, de polyamides et de polybutylène-téréphtalate.

On connaît, par le brevet US 4.181.551, un procédé pour produire des articles moulés sous pression dans lequel on utilise un voile pour déplacer les flans à conformer jusqu'à la presse, le voile étant enroulé en aval de la presse. L'extraction des pièces se fait à l'ouverture de la presse. L'enroulement du voile ne permet pas d'extraire des pièces lourdes et de formes compliquées.

La présente invention pallie les inconvénients ci-dessus et de plus permet une automatisation du procédé, entraînant des gains de temps sensibles, un accroissement de la sécurité pour l'installation, une amélioration de précision dans l'implantation de l'ébauche dans le moule et de résistance du produit fini. L'invention permet de conserver les propriétés de fluage du matériau et d'éviter les temps morts.

Conformément à l'invention, le procédé est caractérisé par le fait qu'il consiste à prendre en charge la pièce conformée solidaire du voile par un bras pourvu de moyens de préhension tels que des ventouses pour dérouler une longueur de voile et évacuer la pièce jusqu'à un support de manière à assurer simultanément l'arrivée d'un nouveau flan dans le moule, un couteau découpant le voile en aval du moule.

Selon une caractéristique, on déroule le voile en ménageant un espace d'air avec le moule.

Selon une caractéristique, le couteau découpant le voile est fixé sur l'élément de moule complémentaire.

Le dispositif comporte un voile support entraîné par une bande sans fin sur lequel on charge les flans à conformer pour les amener entre les deux éléments de moule d'une presse à mouler sous pression et il est caractérisé par le fait qu'il comprend un bras pourvu de moyens de préhension tel que des ventouses pour dérouler une longueur de voile et évacuer la pièce jusqu'à un support de manière à assurer simultanément l'arrivée d'un nouveau flan dans le moule, un couteau découpant le voile en aval du moule.

L'invention va maintenant être décrite avec plus de détails en se référant à des modes de réalisation donnés à titre d'exemples et représentés par les dessins sur lesquels :

— La figure 1 est une vue du dispositif selon l'invention,

— La figure 2 est une vue d'un mode de réalisation permettant de déposer des rajouts sur les flans,

— La figure 3 représente un détail de la figure 2.

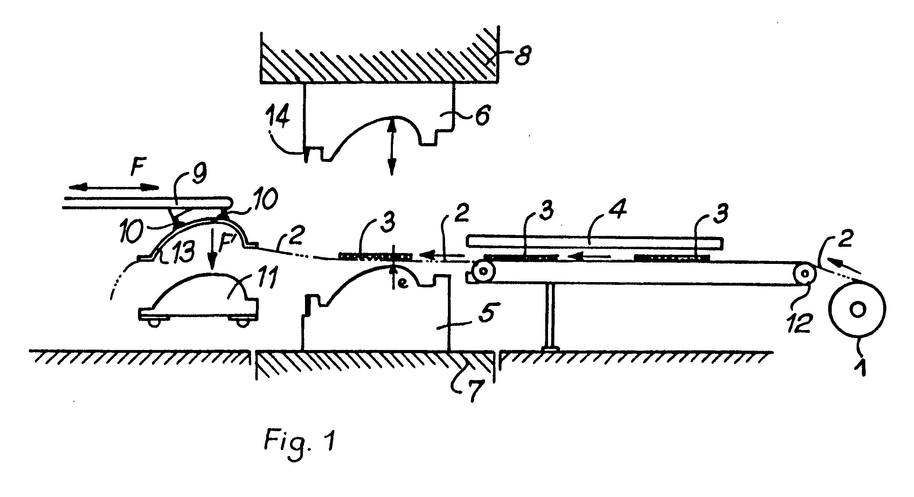

La figure 1 se rapporte à une vue schématique en élévation du dispositif permettant la conformation de pièces en matière synthétique en vue de constituer des éléments de carrosserie ; elle concerne plus particulièrement les techniques dites "SMC" (Sheet Molding Compound) et "GMT" (Glass Mat Thermoplastic). Ce dispositif comprend un four-tunnel 8 associé à une bande sans fin 12. Le moule est constitué de deux parties 5 et 6 fixes sur les plateaux 7 et 8 d'une presse verticale.

On dispose d'un rouleau 1 à partir duquel on tire un film, préférentiellement constitué d'un voile 2 de fibres de verre non tissées, d'un grammage de l'ordre de 65 g/m², également appelé "étamine" ; on pourrait utiliser un autre matériau, par exemple synthétique, tel qu'en polyamides ou polyesters, dont le point de fusion est relativement élevé (200°C). Ce voile constitue un support, à la surface duquel on dispose les flans 3 de matériau à conformer ; ceux-ci traversent un four-tunnel 4, dans le cas d'un matériau thermoplastique constitutif des flans 3, et arrivent entre les deux parties 5-6 du moule conformateur fixées sur les plateaux 7-8 de la presse verticale.

Un bras 9, muni de ventouses 10, est situé en aval de la presse ; il est mobile en translation selon la flèche F, de la position de la figure 1 où il est situé au-dessus d'un support 11 d'évacuation des pièces conformées, jusqu'à l'intérieur de la presse ouverte, et également mobile verticalement selon la flèche F.

En fonctionnement, le voile 2 entraîné par la bande sans fin 12 est muni des flans 3 de matériau thermoplastique renforcé à conformer, en amont du four-tunnel 4 destiné à les rendre plastiques.

Ledit voile 2 suit un trajet prédéterminé entre les deux parties de moule 5-6, permettant de centrer l'ébauche avec précision. Pendant le déroulement, avant fermeture du moule, on ménage un espace d'air entre le voile et l'élément de moule inférieur de manière à éviter tout contact et conserver les propriétés de fluage du matériau. On évite tout contact prématuré du flan avec l'outillage.

L'opération de conformation s'effectue par fermeture du moule ; simultanément, un couteau 14 coupe le voile en aval de la presse, mais respecte son côté opposé, si bien que la pièce située dans le moule est toujours solidaire de la partie amont du voile 2.

Après ouverture de la presse, le bras 9 et ses ventouses 10 viennent prendre en charge la pièce conformée 13 et l'évacue par translation selon F puis lâchage sur le support d'évacuation 11.

Au cours de cette opération, la pièce 13 toujours solidaire du voile 2, entraîne d'un pas le procédé ci-dessus, si bien qu'un nouveau flan 3 est positionné sur le moule 5, une longueur de voile 2 est déroulée et un nouveau flan 3 positionné en amont du four-tunnel.

On constate que le fait d'amener en continu les flans 3 selon la disposition ci-dessus supprime l'opération manuelle antérieure correspondante ainsi que ses contraintes de sécurité.

De ce fait, on bénéficie d'un gain de temps sensible de l'ordre de 20% du cycle, qui ralentit d'autant le refroidissement du flan 3 avant son introduction dans le moule ; de plus, le voile 2 sert de tampon thermique entre le moule 5 et ledit flan 3, lui conservant ainsi toutes ses capacités de fluage nécessaires aux bonnes caractéristiques finales de la pièce.

Dans le cas où on utilise un matériau durcissable, on supprime naturellement le poste 4 de préchauffage et on élève la température de l'élément de moule 5 pour assurer la polymérisation de la pièce conformée. Le reste du procédé décrit demeure valable.

Le voile 2 servant pour le transport des pièces 13 et de leurs ébauches 3 peut leur rester solidaire à demeure, renforçant ainsi leurs caractéristiques de raideur et de résistance mécanique.

Un autre avantage résultant du présent procédé réside dans sa capacité de conformer des pièces complexes présentant des bossages importants.

On sait que de telles pièces sont délicates à obtenir à partir d'une seule ébauche, car le fluage du matériau n'est généralement pas suffisant pour effectuer le contournement du bossage et se ressouder derrière lui dans de bonnes conditions ; au contraire, on constate une mauvaise ressoudure des flux de contournement du bossage et donc des faiblesses mécaniques ou d'aspect à leur jonction. On peut remédier cette faiblesse en disposant au niveau des bossages des rajouts de matière complémentaire qui se souderont et renforceront le flanc principal. Toutefois, cette opération est effectuée manuellement, avec la complication découlant d'une opération supplémentaire, ou mécaniquement, avec des dispositifs antérieurs qui agissent avec imprécision.

Au contraire, selon le procédé de l'invention, on dispose sur le voile de transport 2 le flanc principal et les rajouts en position adéquate de renforcement. Compte tenu de la précision autorisée par le procédé ci-dessus, ces différents éléments se retrouvent dans le moule exactement aux endroits à renforcer.

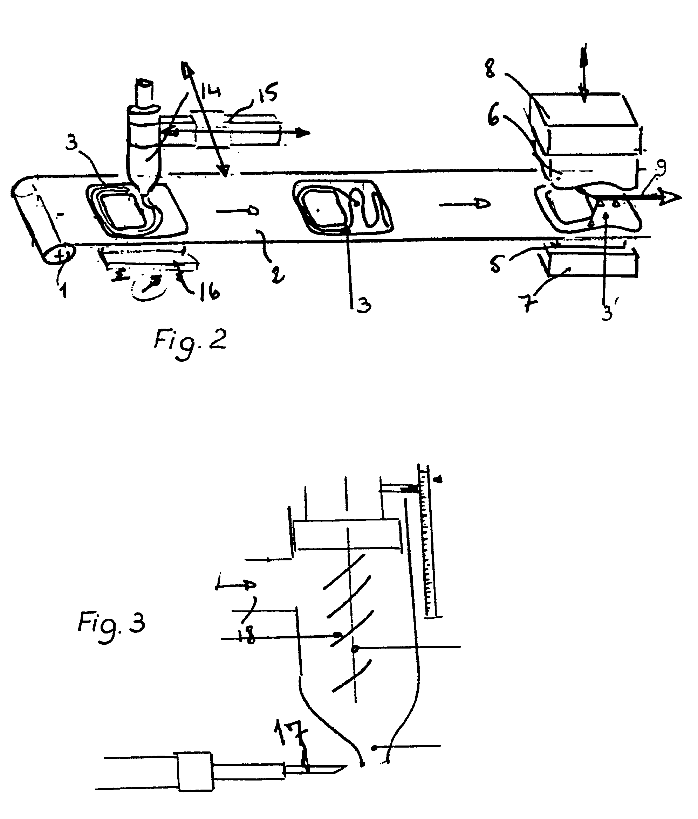

En se référant à la figure 2, on dépose sur le voile 2 des flans ébauches de matière synthétique à l'aide d'une extrudeuse 14 de matière synthétique (piston doseur ou vis piston). Cette extrudeuse est montée mobile selon deux axes orthogonaux au-dessus du voile en amont du four-tunnel, de manière à former les flans ébauches de matière sur le voile. L'extrudeuse est montée sur un bras de robot 15. Une balance 16 permet de réajuster la masse déposée d'une pièce à l'autre. L'ébauche présente des rajouts aux endroits fragiles. La pièce moulée ne présente pas de ressoudures.

En se référant à la figure 3, l'extrudeuse 14 est alimentée par l'entrée 18 et produit à la sortie de la buse un extrudat qui est sectionné par une lame de coupe 17 actionnée par un vérin.

Dans le cas des thermodurs, ce procédé évite de briser les fibres de verre et d'occasionner des lignes de soudure.

## Revendications

1. Procédé de conformation d'éléments en matière synthétique par moulage sous pression, dans lequel on déroule à partir d'une bobine (1) un voile support (2) entraîné par une bande sans fin (12) et sur lequel on charge les flans à conformer, ces derniers étant successivement positionnés par ledit voile (2) sur un élément de moule (5) coopérant avec un élément de moule complémentaire (6), caractérisé par le fait qu'il consiste à prendre en charge la pièce conformée (13) solidaire du voile (2) par un bras (9) pourvu de moyens de préhension tels que des ventouses (10) pour dérouler une longueur de voile (2) et évacuer la pièce (13) jusqu'à un support (11) de manière à assurer simultanément l'arrivée d'un nouveau flan (3) dans le moule, un couteau (14) découpant le voile (2) en aval du moule.

2. Procédé selon la revendication 1, caractérisé par le fait que l'on déroule le voile en ménageant un espace d'air avec l'élément de moule.

3. Procédé selon la revendication 1 ou 2, caractérisé par le fait que le couteau (14) découpant le voile est fixé sur l'élément de moule complémentaire (6).

4. Procédé selon la revendication 1, caractérisé en ce que le voile de transport (2) est constitué de fibres de verre non tissées d'un grammage de l'ordre de 65 g/m².

5. Procédé selon la revendication 1, caractérisé en ce que le voile de transport (2) est constitué de fibres synthétiques du type polyamides ou polyesters dont le point de fusion, élevé, est de l'ordre de 200°C.

6. Procédé selon la revendication 1, caractérisé en ce que l'on dispose sur le voile de transport (2), essentiellement dans le cas de pièces moulées comportant des bossages importants, simultanément des flans principaux (3) et des rajouts de renforcement qui sont amenés dans le moule avec précision aux endroits où lesdits bossages entraînent un déficit de matière de fluage.

7. Procédé selon l'une quelconque des revendications précédentes, caractérisé par le fait qu'il consiste à déposer sur le voile, à l'aide d'une extrudeuse, des galettes destinées à être moulées.

8. Dispositif pour la mise en oeuvre du procédé selon l'une quelconque des revendications précédentes, comportant un voile support (2) entraîné par une bande sans fin (12) sur lequel on charge les flans (3) à conformer pour les amener entre les deux éléments de moule (5-6) d'une presse à mouler sous pression, caractérisé par le fait qu'il comprend un bras (9) pourvu de moyens de préhension tel que des ventouses (10) pour dérouler une longueur de voile (2) et évacuer la pièce (13) jusqu'à un support (11) de manière à assurer simultanément l'arrivée d'un nouveau flan (3) dans le moule, un couteau (14) découpant le voile (2) en aval du moule.

9. Dispositif selon la revendication 8, caractérisé par le fait qu'il comporte une extrudeuse de matière synthétique (14) mobile selon deux axes orthogonaux au-dessus du voile (2) en amont du four-tunnel de manière à déposer des flans de matière synthétique sur le voile.

**Patentansprüche**

1. Verfahren zum Herstellen von Artikeln aus synthetischem Werkstoff mittels Druckgießens, wobei von einer Spule (1) ein Tragband (2) abgerollt wird, das durch ein Endlosband (12) angetrieben wird und auf dem die zu bearbeitenden Rohlinge abgelegt werden, wobei letztere nacheinander von dem Band (2) einem Gießformteil (5) zugeführt werden, das mit einem komplementären Gießformteil (6) zusammenwirkt, dadurch gekennzeichnet, daß es daraus besteht, daß der hergestellte, noch mit dem Band (2) fest verbundene Artikel (13) von einem Arm (9) ergriffen wird, der mit einer Greifanordnung, wie z.B. Saugnäpfen (10), versehen ist, um einen Abschnitt des Bandes (2) abzurollen und den Artikel (13) bis zu einer Halterung (11) zu befördern, so daß gleichzeitig ein neuer Rohling der Gießform zugeführt wird, während ein Messer (14) das Band (2) nach der Gießform abschneidet.

2. Verfahren nach Anspruch 1, dadurch gekennzeichnet, daß das Band derart abgerollt wird, daß zwischen ihm und dem Gießformteil ein Luftspalt entsteht.

3. Verfahren nach Anspruch 1 oder 2, dadurch gekennzeichnet, daß das das Band abschneidende Messer (14) am komplementären Gießformteil (6) befestigt wird.

4. Verfahren nach Anspruch 1, dadurch gekennzeichnet, daß das Transportband (2) aus einem Glasfaservlies besteht mit einem Gewicht in der Größenordnung von 65 g/m².

5. Verfahren nach Anspruch 1, dadurch gekennzeichnet, daß das Transportband (2) aus Polyamid- oder Polyester-Fasern besteht mit einem erhöhten Schmelzpunkt in der Größenordnung von 200°C.

6. Verfahren nach Anspruch 1, dadurch gekennzeichnet, daß auf das Transportband (2), vorzugsweise im Falle von gegossenen Artikeln mit erheblichen Ausbuchtungen, zugleich mit den Haupt-Rohlingen (3) Verstärkungsteile aufgebracht werden, die präzise der Gießform zugeführt werden an denjenigen Stellen, an denen die Ausbuchtungen einen Mangel an verformtem Material bedingen.

7. Verfahren nach einem der vorhergehenden Ansprüche, dadurch gekennzeichnet, daß es daraus besteht auf dem Band mittels einer Extrudiervorrichtung zu gießende Rollen abzulegen.

8. Vorrichtung zur Durchführung des Verfahrens nach einem der vorhergehenden Ansprüche, mit einem Tragband (2), das von einem Endlosband (12) antreibbar ist und auf dem zu bearbeitende Rohlinge (3) abgelegt werden, um diese zwei Gießformteilen (5, 6) einer Druckgußpresse zuzuführen, dadurch gekennzeichnet, daß sie einen Arm (9) aufweist, der mit einer Greifanordnung, wie z.B. Saugnäpfen (10) versehen ist, um einen Abschnitt des Bandes (2) abzurollen und den Artikel (13) einer Halterung (11) zuzuführen, so daß gleichzeitig ein neuer Rohling (3) der Gießform zuführbar ist und ein Messer (14) das Band (2) nach der Gießorm abschneidet.

9. Vorrichtung nach Anspruch 8, dadurch gekennzeichnet, daß sie eine Extrudiervorrichtung für Kunststoff (14) aufweist, die entlang zweier zueinander senkrechter Achsen oberhalb des Bandes (2) und vor dem Tunnelofen derart beweglich ist, daß Kunststoff-Rohlinge auf dem Band ablegbar sind.

## Claims

1. A process for shaping elements of synthetic material by compression moulding wherein a support cloth (2) which is entrained by an endless belt (12) and on which the blanks to be shaped are placed is unwound from a roll (1), the blanks being successively positioned by said cloth (2) on a mould element (5) co-operating with a complementary mould element (6), characterised in that it comprises taking over the shaped component (13) which is fixed with respect to the cloth (2) by an arm (9) provided with gripping means such as suction members (10) to unroll a length of cloth (2) and remove the component (13) to a support (11) so as simultaneously to provide for the arrival of a fresh blank (3) in the mould, a blade (14) cutting the cloth (2) downstream of the mould.

2. A process according to claim 1 characterised in that the cloth is unwound with the provision of an air gap in relation to the mould element.

3. A process according to claim 1 or claim 2 characterised in that the blade (14) for cutting the cloth is fixed on the complementary mould element (6).

4. A process according to claim 1 characterised in that the transportation cloth (2) is formed by non-woven glass fibres of a weight of the order of 65 g/m$^2$.

5. A process according to claim 1 characterised in that the transportation cloth (2) is formed by synthetic fibres of the polyamides or polyesters type having a high melting point of the order of 200°C.

6. A process according to claim 1 characterised by simultaneously disposing on the transportation cloth (2), essentially in the case of moulded components involving substantial boss configurations, main blanks (3) and additional reinforcing portions which are passed into the mould precisely at the locations at which said boss configurations give rise to a deficit of flowing material.

7. A process according to any one of the preceding claims characterised in that it comprises depositing blanks intended to be moulded on the cloth by means of an extruder.

8. Apparatus for carrying out the process according to any one of the preceding claims comprising a support cloth (2) which is entrained by an endless belt (12) and on which the blanks (3) to be shaped are placed to move them between the two mould elements (5, 6) of a compression moulding press characterised in that it comprises an arm (9) provided with gripping means such as suction members (10) for unrolling a length of cloth (2) and removing the component (13) to a support (11) so as simultaneously to provide for the arrival of a fresh blank (3) in the mould, a blade (14) cutting the cloth (2) downstream of the mould.

9. Apparatus according to claim 8 characterised in that it comprises a synthetic material extruder (14) movable along two orthogonal axes above the cloth (2) upstream of the tunnel furnace so as to deposit blanks of synthetic material on the cloth.

Fig. 1

Fig. 2

Fig. 3